# EUROPEAN PATENT APPLICATION

(11) **EP 3 522 082 A1**
(43) Date of publication of application: **07.08.2019**
(21) Application number: 19155040.9
(22) Date of filing: 01.02.2019
(51) Int. Cl.: G06Q 10/04, G06Q 10/06, G06Q 30/08, G06Q 30/06, G06Q 50/10

(54) **INFORMATION PROCESSING APPARATUS AND VEHICLE**

(30) Priority: 05.02.2018 JP 2018018465
(71) Applicant: TOYOTA JIDOSHA KABUSHIKI KAISHA, Aichi-ken 471-8571 (JP)
(72) Inventor: MAKITA, Mitsugu, TOYOTA-SHI, AICHI-KEN, 471-8571 (JP); FUJII, Daigo, TOYOTA-SHI, AICHI-KEN, 471-8571 (JP); YAMAMURO, Naoki, TOYOTA-SHI, AICHI-KEN, 471-8571 (JP)
(74) Representative: Cabinet Beau de Loménie

(57) **Abstract**

An information processing apparatus (10) includes a registration unit (11) receiving registrations of a user providing a service included in an in-vehicle service group and a user desiring to enjoy the service, an acquisition unit (12) matching a first user providing a specific service with a second user desiring to enjoy the specific service, acquiring a first entry time and a first entry position at which the first user gets in a vehicle, and acquiring a second entry time and a second entry position at which the second user gets in the vehicle, a formulation unit (13) formulating a movement plan such that the vehicle stops at the first entry position at the first entry time and stops at the second entry position at the second entry time, and a transmission unit (14) transmitting movement plan information. The vehicle (20) includes a reception unit (21) receiving the movement plan information and an output unit (22) outputting the information.

## Description

### BACKGROUND OF THE INVENTION

### 1. Field of the Invention

The invention relates to an information processing apparatus and a vehicle.

### 2. Description of Related Art

Japanese Unexamined Patent Application Publication No. 2014-215670 (JP 2014-215670 A) discloses a reliability computing device including an address acquisition unit that acquires information of an address of a terminal of another registered user from each terminal, a user map generation unit that generates a user map as a graph in which each user is set to a node and an edge is provided between users having address registration using the acquired address, and a reliability computing unit that computes reliability of another user at each user based on a path from the user to another user using the generated user map, in which the reliability computing device further includes a matching unit that mediates matching between terminals by presenting a user of a matching candidate to a terminal of a user requesting matching based on the computed reliability for the requesting user.

### SUMMARY OF THE INVENTION

However, even though this reliability computing device can determine a suitable fellow passenger of a vehicle, the reliability computing device cannot match a user providing a service, a user desiring to enjoy the service, and a place in which the service is provided.

Therefore, an object of the invention is to provide an information processing apparatus and a vehicle capable of matching a user providing a service, a user desiring to enjoy (i.e., access) the service, and a place in which the service is provided.

An information processing apparatus according to a first aspect of the invention includes a registration unit that receives registration of a user providing a service included in an in-vehicle service group and receives registration of a user requesting the service included in the in-vehicle service group, an acquisition unit that matches a first user providing a specific service included in the in-vehicle service group with a second user requesting the specific service, acquires first entry information indicating a first entry time and a first entry position at which the first user gets in a vehicle, and acquires second entry information indicating a second entry time and a second entry position at which the second user enters the vehicle, a formulation unit that formulates a movement plan of the vehicle such that the vehicle stops at the first entry position at the first entry time and the vehicle stops at the second entry position at the second entry time based on the first entry information and the second entry information, and a transmission unit that transmits movement plan information indicating the movement plan to the vehicle.

A vehicle according to a second aspect of the invention includes a reception unit that receives movement plan information indicating a movement plan that is formulated such that a vehicle stops at a first position at which a first user providing a specific service included an in-vehicle service group enters the vehicle at a first entry time at which the first user enters the vehicle and the vehicle stops at a second position at which a second user desiring to enjoy the specific service enters the vehicle at a second entry time at which the second user enters the vehicle, and an output unit that outputs the movement plan information.

According to the aspects of the invention, it is possible to provide an information processing apparatus and a vehicle capable of matching a user providing a service, a user desiring to enjoy the service, and a place in which the service is provided.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram illustrating an example of a configuration of an information processing apparatus and a vehicle according to an embodiment; and
FIG. 2 is a sequence diagram illustrating an example of a process performed by the information processing apparatus and the vehicle according to the embodiment.

### DETAILED DESCRIPTION OF EMBODIMENTS

An embodiment of the invention will be described with reference to accompanying drawings. In each drawing, a component denoted by the same reference symbol has the same or similar configuration.

### [Embodiment]

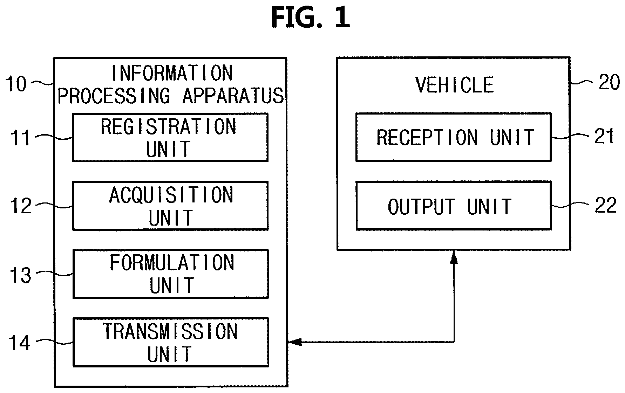

A description will be given of a configuration of an information processing apparatus and a vehicle according to an embodiment with reference to FIG. 1.

For example, an information processing apparatus 10 is a server installed in a data center, and includes a registration unit 11, an acquisition unit 12, a formulation unit 13, and a transmission unit 14 as illustrated in FIG. 1. In addition, the information processing apparatus 10 may include at least the acquisition unit 12, the formulation unit 13, and the transmission unit 14. The information processing apparatus 10 may correspond to a set of individual apparatuses having respective functions of constituent elements, for example, a set of edge servers having respective functions of the registration unit 11, the acquisition unit 12, the formulation unit 13, and the transmission unit 14 and being installed at each of four micro data centers.

A vehicle 20 is an automobile serving as a place for providing at least one service and is loaded with a facility and a material for realizing the interior required for providing the service. For example, this facility and this material correspond to a toy or a plaything for children for providing a childcare service, a minor or a washbasin for providing a beauty service, and a bed for providing a massage. In addition, for example, as illustrated in FIG. 1, the vehicle 20 includes a reception unit 21 and an output unit 22, and another apparatus having equivalent functions for the reception unit 21 and the output unit 22 may be used.

The information processing apparatus 10 and the vehicle 20 may have constituent elements other than those illustrated in FIG. 1.

The registration unit 11 receives registration of a user who provides a service included in an in-vehicle service group and receives registration of a user who desires to enjoy the service included in the in-vehicle service group. Here, the in-vehicle service group is a service that can be provided in the vehicle 20, for example, a childcare service, a beauty service, or a massage. For example, the user who provides the service is a nursery teacher, a hairdresser, or a licensed masseur. The registration unit 11 may store information about a user having registration that has been received in a storage medium provided therein or an external storage medium. In addition, it is preferable that a process executed by the registration unit 11 is completed a predetermined time before a process executed by the acquisition unit 12.

The acquisition unit 12 matches a first user who provides a specific service included in the in-vehicle service group with a second user who desires to enjoy the specific service (i.e. is requesting the service), acquires first entry information indicating a first entry time and a first entry position at which the first user enters the vehicle 20, and acquires second entry information indicating a second entry time and a second entry position at which the second user enters the vehicle 20. The first entry time and the second entry time are specific times or time zones. The first entry position and the second entry position are specific spots or regions.

For example, the acquisition unit 12 acquires the first entry information or the second entry information input to a portable terminal carried by the first user or the second user from the portable terminal. For example, the acquisition unit 12 may acquire the first entry position or the second entry position from a global positioning system (GPS) receiver mounted on the portable terminal carried by the first user or the second user.

For example, the acquisition unit 12 matches one hairdresser as the first user who provides the beauty service with a customer as the second user who desires to enjoy the beauty service provided by this hairdresser (i.e., is requesting beauty service from this hairdresser). The one hairdresser and the customer mentioned herein correspond to a person having registration that has been received by the registration unit 11. Then, the acquisition unit 12 acquires the first entry information indicating the first entry time and the first entry position at which this hairdresser enters the vehicle 20, and acquires the second entry information indicating the second entry time and the second entry position at which this customer enters the vehicle 20.

The formulation unit 13 formulates a movement plan of the vehicle 20 such that the vehicle 20 stops at the first entry position at the first entry time and the vehicle 20 stops at the second entry position at the second entry time based on the first entry information and the second entry information. This movement plan is an itinerary for the vehicle 20 allowing the first user and the second user to enter and exit the vehicle, and includes, for example, a route on which the vehicle 20 travels, a spot at which the vehicle 20 passes or stops at a predetermined time, and a speed of the vehicle 20. In addition, when the first entry time and the second entry time correspond to specific time zones, and the first entry position and the second entry position correspond to specific regions, a plurality of movement plans may be formulated for a set of the first entry information and the second entry information.

The transmission unit 14 transmits movement plan information indicating the movement plan to the vehicle 20.

In addition, the acquisition unit 12 may acquire first exit information indicating a first exit time and a first exit position at which the first user exits the vehicle 20 (i.e., gets out of the vehicle). In this case, the formulation unit 13 formulates a movement plan of the vehicle 20 such that the vehicle 20 further stops at the first exit position at the first exit time. Further, the acquisition unit 12 may acquire a required time of a specific service. In this case, the formulation unit 13 may formulate a movement plan of the vehicle 20 such that a time from the first entry time to the first exit time is equal to the required time of the specific service.

Similarly, the acquisition unit 12 may acquire second exit information indicating a second exit time and a second exit position at which the second user exits the vehicle 20. In this case, the formulation unit 13 formulates a movement plan of the vehicle 20 such that the vehicle 20 further stops at the second exit position at the second exit time. Further, the acquisition unit 12 may acquire a required time of a specific service. In this case, the formulation unit 13 may formulate a movement plan of the vehicle 20 such that a time from the second entry time to the second exit time is equal to the required time of the specific service.

The acquisition unit 12 acquires the first exit information and the second exit information using the same means as means for acquiring the first entry information and the second entry information. In addition, the first exit time and the second exit time correspond to specific times or time zones. Similarly, the first exit position and the second exit position correspond to specific spots or regions. Therefore, when the first exit time and the second exit time correspond to specific time zones and the first exit position and the second exit position correspond to specific regions, the formulation unit 13 may formulate a plurality of movement plans.

The reception unit 21 receives movement plan information indicating a movement plan that is formulated such that the vehicle stops at a first position at which the first user who provides a specific service included in the in-vehicle service group enters the vehicle at a first entry time at which the first user enters the vehicle (i.e., gets into the vehicle) and the vehicle stops at a second position at which the second user who desires to enjoy the specific service enters the vehicle at a second entry time at which the second user enters the vehicle.

The output unit 22 outputs the movement plan information. For example, when the vehicle 20 moves by manual operation, the output unit 22 corresponds to a display or a speaker of a car navigation device. In this case, the vehicle 20 moves according to the movement plan formulated by the formulation unit 13 by a driver who refers to the movement plan displayed on the display. Meanwhile, the output unit 22 is a device that controls each unit of the vehicle 20 so that, when the vehicle 20 moves by automatic operation, the vehicle 20 moves according to the movement plan formulated by the formulation unit 13. In this case, the vehicle 20 is controlled by this device and moves according to the movement plan formulated by the formulation unit 13.

In either case, the first user provides a specific service to the second user while the vehicle 20 is moving according to the movement plan, which is the same even when at least one of first exit and entry and second exit and entry is acquired. In addition, after the first user provides the specific service to the second user, the interior of the vehicle 20 may be changed, a new movement plan may be formulated, and another first user may provide another specific service to another second user.

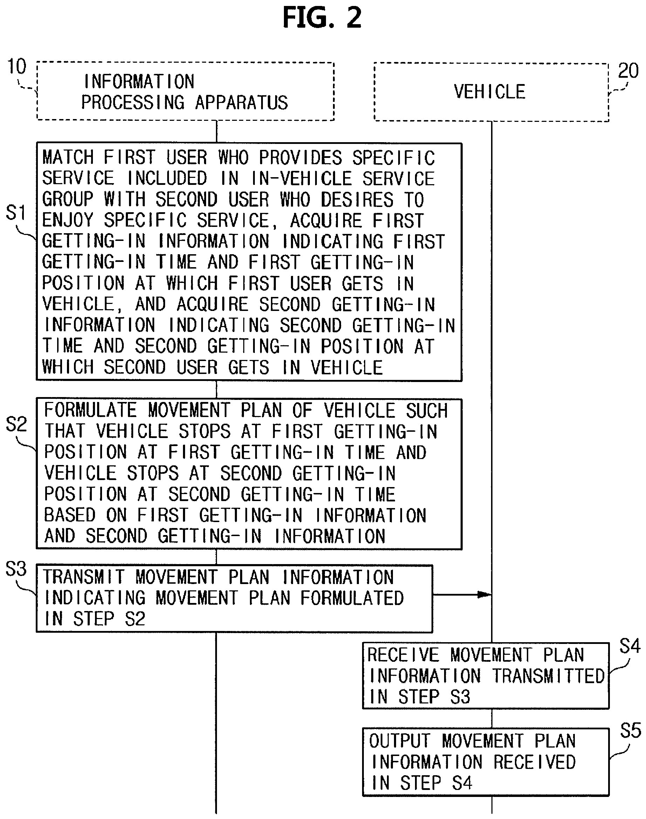

A description will be given of an example of a process performed by the information processing apparatus 10 and the vehicle 20 according to the embodiment with reference to FIG. 2.

In step S1, the acquisition unit 12 matches the first user who provides the specific service included in the in-vehicle service group with the second user who desires to enjoy the specific service, acquires the first entry information indicating the first entry time and the first entry position at which the first user enters the vehicle 20, and acquires the second entry information indicating the second entry time and the second entry position at which the second user enters the vehicle 20.

In step S2, the formulation unit 13 formulates the movement plan of the vehicle 20 such that the vehicle 20 stops at the first entry position at the first entry time and the vehicle 20 stops at the second entry position at the second entry time based on the first entry information and the second entry information.

In step S3, the transmission unit 14 transmits the movement plan information indicating the movement plan formulated in step S2.

In step S4, the reception unit 21 receives the movement plan information transmitted in step S3.

In step S5, the output unit 22 outputs the movement plan information received in step S4.

The embodiment which is an example of the invention has been described above. The information processing apparatus 10 according to the embodiment matches the first user who provides the specific service with the second user who desires to enjoy the specific service, acquires the first entry time and the first entry position at which the first user enters the vehicle 20, acquires the second entry time and the second entry position at which the second user enters the vehicle 20, formulates the movement plan of the vehicle 20 such that the vehicle 20 stops at the first entry position at the first entry time and the vehicle 20 stops at the second entry position at the second entry time, and outputs the movement plan to the vehicle 20. For this reason, the information processing apparatus 10 and the vehicle 20 can match a user who provides a service, a user who desires to enjoy the service, and a place in which the service is provided.

In addition, the information processing apparatus 10 acquires the first exit time and the first exit position at which the first user exits the vehicle 20, formulates the movement plan of the vehicle 20 such that the vehicle 20 further stops at the first exit position at the first exit time, and outputs the movement plan to the vehicle 20. For this reason, the information processing apparatus 10 and the vehicle 20 can cause the first user to exit the vehicle 20 at a desired time.

Further, the information processing apparatus 10 acquires a required time of a specific service, formulates a movement plan of the vehicle 20 such that a time from the first entry time to the first exit time is equal to the required time of the specific service, and outputs the movement plan to the vehicle 20. For this reason, the information processing apparatus 10 and the vehicle 20 can cause the first user finishing providing the specific service to promptly exit the vehicle 20.

Similarly, the information processing apparatus 10 acquires the second exit time and the second exit position at which the second user exits the vehicle 20, formulates the movement plan of the vehicle 20 such that the vehicle 20 further stops at the second exit position at the second exit time, and outputs the movement plan to the vehicle 20. For this reason, the information processing apparatus 10 and the vehicle 20 can cause the second user to exit the vehicle 20 at a desired time.

Further, the information processing apparatus 10 acquires a required time of a specific service, formulates a movement plan of the vehicle 20 such that a time from the second entry time to the second exit time is equal to the required time of the specific service, and outputs the movement plan to the vehicle 20. For this reason, the information processing apparatus 10 and the vehicle 20 can cause the second user finishing enjoying the specific service to promptly exit the vehicle 20.

At least one of the registration unit 11, the acquisition unit 12, the formulation unit 13, and the transmission unit 14 may be included in the vehicle 20.

The invention is not limited to the above-described embodiment, and can be implemented in various other forms without departing from a subject matter of the invention. Therefore, the above-described embodiment is merely illustrative in all respects, and is not to be interpreted restrictively. For example, respective processing steps described above can be arbitrarily changed in order or executed in parallel as long as there is no inconsistency in processing contents.

## Claims

1. An information processing apparatus comprising:
a registration unit (11) configured to receive registration of a user providing a service included in an in-vehicle service group and to receive registration of a user requesting the service included in the in-vehicle service group;
an acquisition unit (12) configured to:
match a first user providing a specific service included in the in-vehicle service group with a second user requesting the specific service,
acquires first entry information indicating a first entry time and a first entry position at which the first user enters a vehicle (20), and
acquire second entry information indicating a second entry time and a second entry position at which the second user enters the vehicle (20);
a formulation unit (13) configured to formulate a movement plan of the vehicle (20) such that the vehicle stops at the first entry position at the first entry time and the vehicle (20) stops at the second entry position at the second entry time based on the first entry information and the secondentry information; and
a transmission unit (14) that transmits movement plan information indicating the movement plan to the vehicle (20).

2. The information processing apparatus according to claim 1, wherein:
the acquisition unit (12) is configured to acquire first exitexit information indicating a first exit time and a first exit position at which the first user exits the vehicle (20); and
the formulation unit (13) is configured to formulate a movement plan of the vehicle (20) such that the vehicle (20) further stops at the first exit position at the first exit time.

3. The information processing apparatus according to claim 2, wherein:
the acquisition unit (12) is configured to acquire a required time of the specific service; and
the formulation unit (13) is configured to formulate a movement plan of the vehicle (20) such that a time from the first entry time to the first exit time is equal to the required time of the specific service.

4. The information processing apparatus according to claim 1, wherein:
the acquisition unit (12) is configured to acquire second exit information indicating a second exit time and a second exit position at which the second user exits the vehicle (20); and
the formulation unit (13) is configured to formulate a movement plan of the vehicle (20) such that the vehicle (20) further stops at the second exit position at the second exit time.

5. The information processing apparatus according to claim 4, wherein:
the acquisition unit (12) is configured to acquire a required time of the specific service; and
the formulation unit (13) is configured to formulate a movement plan of the vehicle (20) such that a time from the second entry time to the second exit time is equal to the required time of the specific service.

6. A vehicle comprising:
a reception unit (21) configured to receive movement plan information indicating a movement plan that is formulated such that the vehicle (20) stops at a first position at which a first user providing a specific service included an in-vehicle service group enters the vehicle (20) at a first entry time at which the first user gets in the vehicle (20) and the vehicle (20) stops at a second position at which a second user desiring to enjoy the specific service enters the vehicle (20) at a second entry time at which the second user enters the vehicle (20); and
an output unit (22) that outputs the movement plan information.
